# EUROPEAN PATENT APPLICATION

(11) **EP 4 679 612 A1**
(43) Date of publication of application: **14.01.2026**
(21) Application number: 24766159.8
(22) Date of filing: 03.01.2024
(51) Int. Cl.: H01M 50/528, H01M 50/531

(54) **SINGLE BATTERY**

(30) Priority: 09.03.2023 CN 202320510112 U
(71) Applicant: Sunwoda Mobility Energy Technology Co., Ltd., Shenzhen, Guangdong 518107 (CN)
(72) Inventor: HU, Mingjiang, Shenzhen, Guangdong 518107 (CN)
(74) Representative: Ostriga PartGmbB
(86) International application number: PCT/CN2024/070357
(87) International publication number: WO 2024/183436

(57) **Abstract**

The present application relates to the technical field of batteries, and discloses a single battery, comprising battery cells, a top cover, and connection members. Tabs extend out from one end of each battery cell; the top cover comprises conductive terminals; the connection members each comprise a base body and a thinned region, and the thickness of the thinned region is smaller than that of the base body; the conductive terminals are welded to the thinned regions; and the tabs are welded to the base bodies. The connection members are connected to the conductive terminals by means of the thinned regions, and are connected to the tabs by means of the base bodies. The thickness of the base bodies does not affect the welding between the thinned regions and the conductive terminals. Therefore, the structure and thickness of the thinned regions can be rationally configured according to welding requirements. The thickness of the base bodies is rationally configured according to current passing requirements, thereby avoiding the effect of the increase in the current passing area of the connection members on the yield of welding between the connection members and the conductive terminals. In addition, the thinned regions realize the reduction of local thickness, thereby reducing the amount of a material, facilitating the reduction of the material cost, reducing the weight, facilitating the improvement of the weight energy density of single batteries, and implementing high-energy-density single batteries.

## Description

### CROSS-REFERENCE TO RELATED APPLICATION

The present disclosure is based on and claims the benefit of priority from Chinese patent application No. 202320510112.6, filed on March 9, 2023, the entire contents of which are incorporated herein by reference.

### TECHNICAL FIELD

The present disclosure relates to the field of battery manufacturing, and more particularly to a battery cell.

### BACKGROUND

In some battery cells, the cell tabs are connected to the top cover through connecting pieces, usually by laser penetration welding. For battery cells requiring fast charging, the connecting piece needs to have a large current conduction area. Factors affecting the current conduction area of the connecting piece mainly include the width and thickness of the connecting piece. In the structure of a battery cell, the width of the connecting piece is limited by the width of the cell core. Therefore, in some technologies, the current conduction area is increased by increasing the thickness of the connecting piece, to meet the fast charging requirements. However, since the thickness of the connecting piece has a direct impact on the requirements of the welding process, an increase in the thickness of the connecting piece leads to higher requirements on the laser welding process and a higher welding difficulty, affecting the welding quality and reducing the welding yield.

### SUMMARY

The present disclosure aims to at least solve one of the technical problems in the existing technology. Therefore, the present disclosure provides a battery cell, which can effectively solve the problem that an increase in the current conduction area of the connecting piece affects the welding yield.

According to an embodiment of the present disclosure, a battery cell is provided. The battery cell includes a cell core, a top cover, and a connecting piece; a tab extends from one end of the cell core; the top cover includes a conductive terminal; the connecting piece includes a base body and a thinned region, and a thickness of the thinned region is less than a thickness of the base body; the conductive terminal is welded to the thinned region, and the tab is welded to the base body.

The battery cell of the embodiment of the present disclosure at least has the following beneficial effects. The connecting piece is connected to the conductive terminal by the thinned region and is connected to the tab by the base body, thus the thickness of the base body does not affect the welding between the thinned region and the conductive terminal. Therefore, the structure and thickness of the thinned region can be properly configured according to a welding requirement, and the thickness of the base body can be properly configured according to a current conduction requirement, preventing the increase of the current conduction area of the connecting piece from affecting the yield of welding between the connecting piece and the conductive terminal.

According to some embodiments of the present disclosure, the connecting piece has a first direction and a second direction intersecting the first direction, and one end of the thinned region in the first direction is connected to one end of the base body in the first direction.

According to some embodiments of the present disclosure, the conductive terminal is provided with a protruding portion, the thinned region is provided with a first through hole, and the protruding portion is inserted into the first through hole and is welded to the thinned region.

According to some embodiments of the present disclosure, a sink hole is provided on a side of the connecting piece in a thickness direction to form the thinned region, the sink hole is polygonal, circular, or elliptical, and the conductive terminal is welded to a side of the thinned region facing away from the sink hole.

According to some embodiments of the present disclosure, the connecting piece has a first direction and a second direction intersecting the first direction, along the first direction, the connecting piece includes a first end and a second end; and along the second direction, the thinned region is located in a middle portion of the connecting piece, the base body is arranged on two sides of the thinned region, and the thinned region extends along the first direction to the first end and the second end.

According to some embodiments of the present disclosure, the connecting piece is provided with a second through hole corresponding to the thinned region, the conductive terminal is provided with a protruding portion, and the protruding portion is inserted into the second through hole and is welded to the thinned region.

According to some embodiments of the present disclosure, the connecting piece has a first direction and a second direction intersecting the first direction, the thinned region includes a first region and a second region, one end of the first region in the first direction is connected to one end of the second region in the first direction, and along the second direction, a width of the first region is greater than a width of the second region.

According to some embodiments of the present disclosure, the first region is provided with a third through hole, the conductive terminal is provided with a protruding portion, and the protruding portion is inserted into the third through hole and is welded to the first region.

According to some embodiments of the present disclosure, an area of the thinned region is less than or equal to 90% of an area of the connecting piece.

According to some embodiments of the present disclosure, a positive tab and a negative tab extend from one end of the cell core; the top cover includes a positive electrode conductive terminal and a negative electrode conductive terminal, and two connecting pieces are provided;
the thinned region of one of the connecting pieces is connected to the positive electrode conductive terminal by laser penetration welding, and the base body is connected to the positive tab by ultrasonic welding; and
the thinned region of the other connecting piece is connected to the negative electrode conductive terminal by laser penetration welding, and the base body is connected to the negative tab by ultrasonic welding.

Other aspects and advantages of the present disclosure will be given in the following description, some of which will become apparent from the following description or may be learned from practices of the present disclosure.

### BRIEF DESCRIPTION OF DRAWINGS

FIG. 1 is a schematic structural diagram of an example of a connecting piece according to an embodiment of the present disclosure;
FIG. 2 is a schematic diagram of a battery cell comprising the connecting piece shown in FIG. 1;
FIG. 3 is a partial schematic structural exploded view of the battery cell shown in FIG. 2;
FIG. 4 is a schematic cross-sectional view of the position of the connecting piece in the battery cell shown in FIG. 2;
FIG. 5 is a schematic structural diagram of another example of a connecting piece according to an embodiment of the present disclosure;
FIG. 6 is a schematic diagram of a battery cell comprising the connecting piece shown in FIG. 5;
FIG. 7 is a schematic structural diagram of an example of a top cover in the battery cell shown in FIG. 6;
FIG. 8 is a schematic cross-sectional view of the position of the connecting piece in the battery cell shown in FIG. 6;
FIG. 9 is a schematic structural diagram of another example of a connecting piece according to an embodiment of the present disclosure;
FIG. 10 is a schematic diagram of a battery cell comprising the connecting piece shown in FIG. 9;
FIG. 11 is a schematic cross-sectional view of the position of the connecting piece in the battery cell shown in FIG. 9;
FIG. 12 is a schematic structural diagram of another example of a connecting piece according to an embodiment of the present disclosure;
FIG. 13 is a schematic structural diagram of a further improvement of the connecting piece shown in FIG. 12;
FIG. 14 is a schematic diagram of a battery cell comprising the connecting piece shown in FIG. 13;
FIG. 15 is a schematic cross-sectional view of the position of the connecting piece in the battery cell shown in FIG. 14;
FIG. 16 is a schematic structural diagram of another example of a connecting piece according to an embodiment of the present disclosure;
FIG. 17 is a schematic structural diagram of a further improvement of the connecting piece shown in FIG. 16;
FIG. 18 is a schematic diagram of a battery cell comprising the connecting piece shown in FIG. 17; and
FIG. 19 is a schematic cross-sectional view of the position of the connecting piece in the battery cell shown in FIG. 18.

Reference numerals:
connecting piece 100, thinned region 101, base body 102, first region 103, second region 104, first through hole 105, first end 106, second end 107, second through hole 108, third through hole 109;
cell core 200, positive tab 201, negative tab 202;
top cover 300, positive electrode conductive terminal 301, negative electrode conductive terminal 302, protruding portion 303.

### DETAILED DESCRIPTION

The concept of the present disclosure and the technical effects produced thereby will be clearly and completely described below in conjunction with the embodiments, to enable a full understanding of the purpose, features and effects of the present disclosure. Apparently, the described embodiments are only a part of the embodiments of the present disclosure, rather than all the embodiments. Based on the embodiments of the present disclosure, other embodiments obtained by those having ordinary skills in the art without creative work shall all fall within the protection scope of the present disclosure.

In the description of the present disclosure, it should be understood that for the description of orientations, the orientational or positional relationships indicated by the terms such as "up," "down," "front," "rear," "left," "right" and the like are based on orientational or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

In the description of the embodiments of the present disclosure, if a feature is referred to as being "arranged," "fixed," "connected" or "mounted" on another feature, it may be directly arranged, fixed, connected or mounted on the another feature, or indirectly arranged, fixed, connected or mounted on the another feature. It should be understood that in the description of the embodiments of the present disclosure, the term "several" means one or more, the term "plurality of" or "multiple" means two or more, the term such as "more than", "less than", "exceed" is understood to not include the specified number, and the terms such as "no less than", "no more than", and "within" is understood to include the specified number. As used herein, the terms such as "first", "second", and the like are merely used for distinguishing technical features, and are not intended to indicate or imply relative importance, or implicitly point out the number of the indicated technical features, or implicitly point out the precedence order of the indicated technical features.

In some battery cells, the cell tabs are connected to the top cover through connecting pieces, usually by laser penetration welding. When the width of the connecting piece is limited, increasing the thickness of the connecting piece can increase the current conduction area to meet the fast charging requirements. However, since the thickness of the connecting piece has a direct impact on the requirements of the welding process, increasing the thickness of the connecting piece to meet the current conduction requirements leads to higher requirements on the laser welding process, resulting in a decrease in the welding yield. In addition, the increase in the thickness of the connecting piece also leads to an increase in weight and material consumption, which is not conducive to the improvement of the gravimetric energy density of the battery cell and increases the material costs.

An embodiment of the present disclosure provides a battery cell, which can ensure the yield of welding between the connecting piece and the conductive terminal while meeting the current conduction area of the connecting piece. Embodiments of the present disclosure will be further described in detail below with reference to the accompanying drawings. It should be noted that direction arrows marked in the drawings (for example, arrows used to indicate a first direction and a second direction) are merely used to serve as examples and orientation references, and are not intended to limit the specific directions of the direction arrows ( such as the first direction). In some embodiments, the direction arrow indicating the first direction may also point to a direction opposite to that shown in the drawings, so the direction of the direction arrow indicating the first direction is not limited in embodiments of the present disclosure.

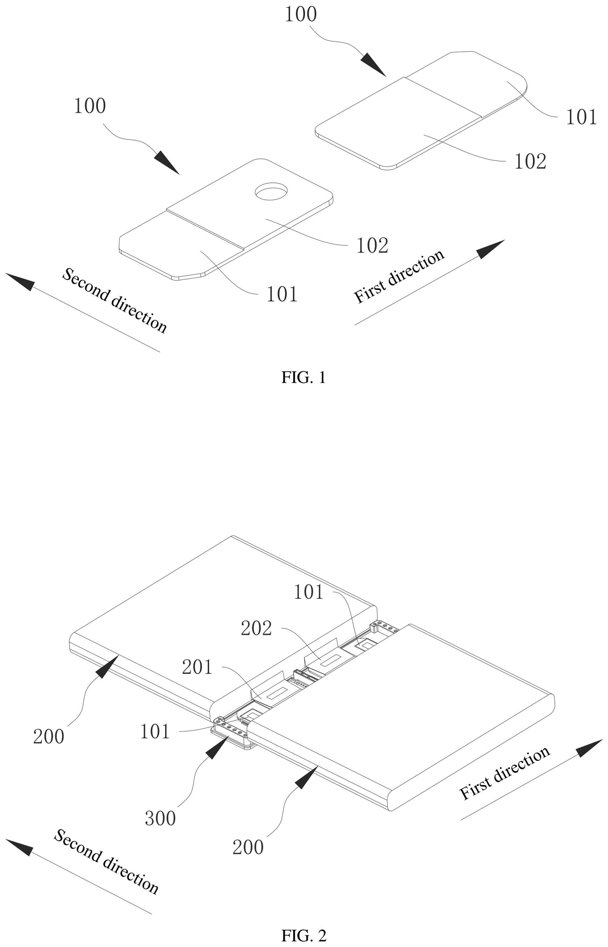

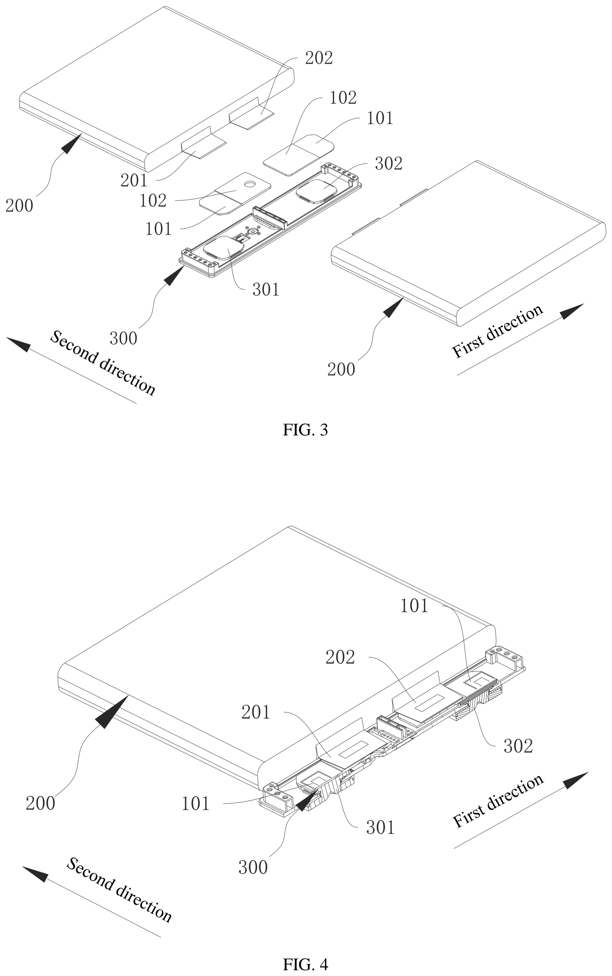

Referring to FIG. 1 to FIG. 4, a battery cell according to an embodiment of the present disclosure includes a cell core 200, a top cover 300, and a connecting piece 100. A tab extends from one end of the cell core 200. The top cover 300 includes a conductive terminal. The connecting piece 100 includes a base body 102 and a thinned region 101. A thickness of the thinned region 101 is less than a thickness of the base body 102. The conductive terminal is welded to the thinned region 101. The tab is welded to the base body 102. As such, the connecting piece 100 is connected to the conductive terminal by the thinned region 101 and is connected to the tab by the base body 102, and the thickness of the base body 102 does not affect the welding between the thinned region 101 and the conductive terminal. Therefore, the structure and thickness of the thinned region 101 can be properly configured according to a welding requirement to ensure the welding quality. The thickness of the base body 102 is properly configured according to a current conduction requirement, to meet the current conduction area of the connecting piece 100 without affecting the yield of welding between the connecting piece 100 and the conductive terminal, thereby ensuring the connection quality.

It should be noted that in the battery cell according to the embodiment of the present disclosure, the tab of the cell core 200 includes a positive tab 201 and a negative tab 202, and the conductive terminal includes a positive electrode conductive terminal 301 and a negative electrode conductive terminal 302. In the battery cell according to the embodiment of the present disclosure, one connecting piece 100 is provided for each of a positive electrode and a negative electrode. One of the connecting pieces 100 is configured to connect the positive tab 201 and the positive electrode conductive terminal 301, and the other connecting piece 100 is configured to connect the negative tab 202 and the negative electrode conductive terminal 302. The same applies to subsequent embodiments. Specifically, a positive tab 201 and a negative tab 202 extend from one end of the cell core 200, the top cover 300 includes a positive electrode conductive terminal 301 and a negative electrode conductive terminal 302, and two connecting pieces 100 are provided. The thinned region 101 of one of the connecting pieces 100 is connected to the positive electrode conductive terminal 301 by laser penetration welding. The base body 102 is connected to the positive tab 201 by ultrasonic welding. The thinned region 101 of the other connecting piece 100 is connected to the negative electrode conductive terminal 302 by laser penetration welding. The base body 102 is connected to the negative tab 202 by ultrasonic welding.

Compared with a scheme without the thinned region 101, according to the embodiment of the present disclosure, the arrangement of the thinned region 101 on the connecting piece 100 realizes the reduction of local thickness, such that the material consumption can be reduced to reduce material costs. In addition, the weight can be reduced to improve the gravimetric energy density of the battery cell, thereby obtaining a battery cell with high energy density.

In practical applications, the base body 102 and the thinned region 101 of the connecting piece 100 in the battery cell according to the embodiment of the present disclosure may be configured in various manners. Examples are given below.

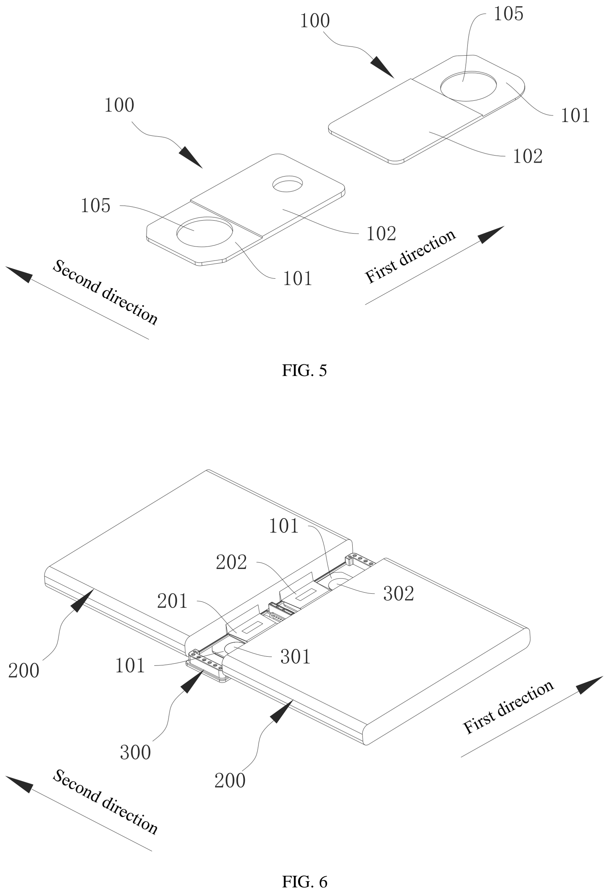

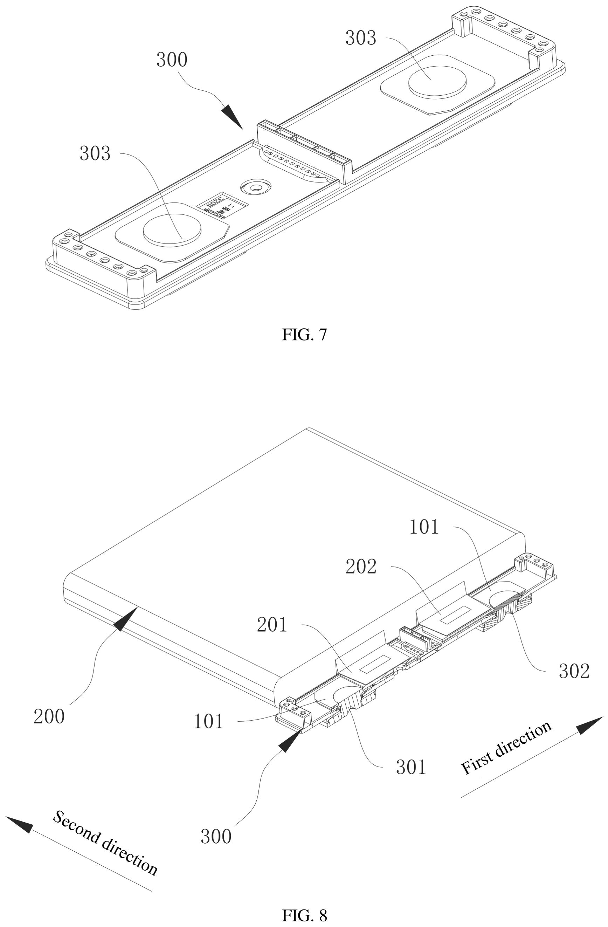

In some embodiments, the connecting piece 100 has a first direction and a second direction intersecting the first direction. The first direction and the second direction may intersect perpendicularly or at an acute angle or an obtuse angle. FIG. 1 to FIG. 4 show an example where the first direction and the second direction intersect perpendicularly. Referring to FIG. 1 to FIG. 4, one end of the thinned region 101 in the first direction is connected to one end of the base body 102 in the first direction, such that the position at which the tab is connected to the connecting piece and the position at which the conductive terminal is connected to the connecting piece are arranged along the first direction, the conductive terminal is connected to a side of the thinned region 101 facing the top cover 300, and the tab is connected to a side of the base body 102 facing away from the top cover 300. A dimension of the thinned region 101 in the second direction may be properly configured according to the structure of the conductive terminal and a welding requirement. For example, in FIG. 1, the thinned region 101 extends over an edge of the connecting piece 100 in the second direction, and therefore is suitable for being welded to conductive terminals of various sizes and has good tolerance, which is conducive to improving the welding yield. Based on this, referring to FIG. 5 to FIG. 8, the thinned region 101 may be provided with a first through hole 105, the conductive terminal is provided with a protruding portion 303, and the protruding portion 303 is inserted into the first through hole 105 and is welded to the thinned region 101. The protruding portion 303 may be welded to the thinned region 101 by seam welding. The shape of the first through hole 105 may match the shape of an outer periphery of the protruding portion 303, such that the protruding portion 303 can be welded to the thinned region 101 by seam welding. The insertion of the protruding portion 303 into the first through hole 105 can reduce the space occupied by the connecting piece 100 and the conductive terminal in a height direction of the battery cell (i.e., in a thickness direction of the connecting piece 100), which is conducive to improving the utilization of space in the battery cell and increasing the volumetric energy density.

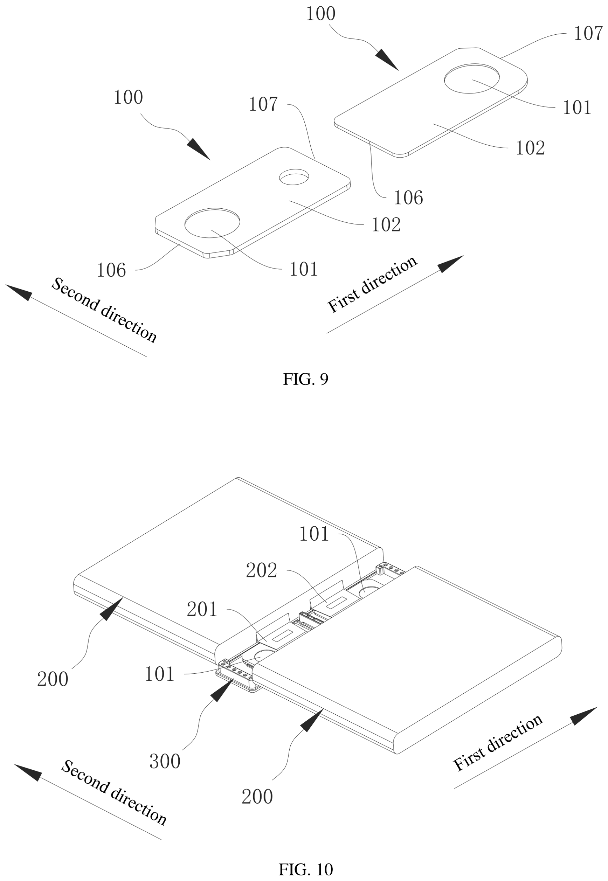

Referring to FIG. 9 to FIG. 11, in some embodiments, a sink hole is provided on a side of the connecting piece 100 in a thickness direction to form the thinned region 101, the sink hole is polygonal, circular, or elliptical, and the conductive terminal is welded to a side of the thinned region 101 facing away from the sink hole. As such, the arrangement of the thinned region 101 realizes the reduction of local thickness of the connecting piece 100, such that while ensuring the current conduction area, the weight can be reduced to improve the gravimetric energy density of the battery cell, and the material consumption can be reduced to reduce material costs. As the sink hole is provided to form the thinned region 101, the thickness of the region to which the conductive terminal needs to be welded is reduced, and the strength and the current conduction area of the connecting piece 100 are ensured. The thinned region 101 may be connected to the conductive terminal by penetration welding. The thickness of the thinned region 101 may be properly configured according to a welding requirement, thereby ensuring the welding quality and effectively preventing the thickness at the welding position from being too large to affect the welding yield.

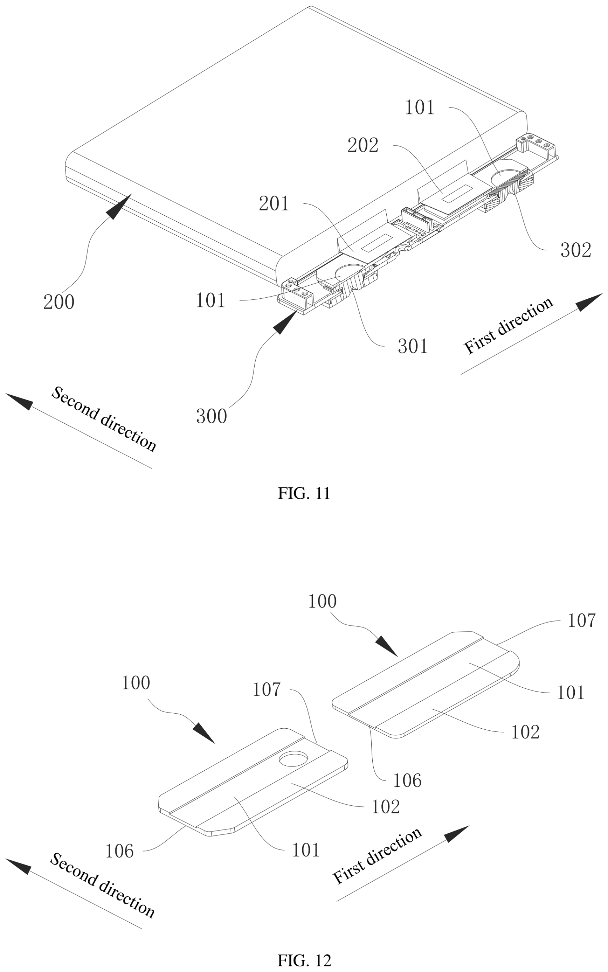

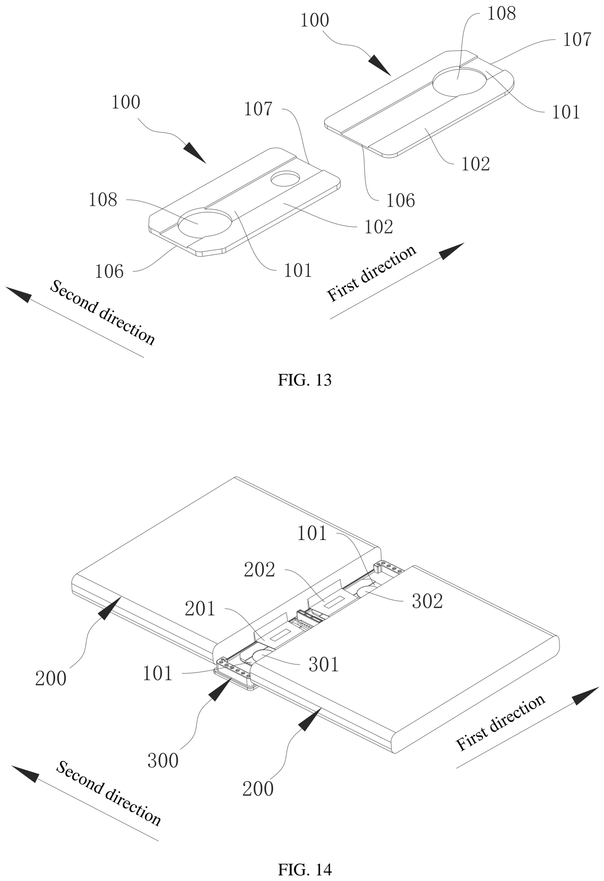

In some embodiments, the connecting piece 100 has a first direction and a second direction intersecting the first direction. The first direction and the second direction may intersect perpendicularly or at an acute angle or an obtuse angle. FIG. 12 to FIG. 15 show an example where the first direction and the second direction intersect perpendicularly. Referring to FIG. 12, along the first direction, the connecting piece 100 includes a first end 106 and a second end 107. Along the second direction, the thinned region 101 is located in a middle portion of the connecting piece 100, the base body 102 is arranged on two sides of the thinned region 101, and the thinned region 101 extends along the first direction to the first end 106 and the second end 107. As such, a large thinned region 101 is formed, and the weight of the connecting piece 100 and the material consumption can be reduced, thereby improving the gravimetric energy density of the battery cell. The thickness of the base body 102 ensures the current conduction area of the connecting piece 100, and the thinned region 101 formed in the middle portion can be used for being welded to the conductive terminal. The thickness of the thinned region 101 is small and may be properly configured according to a welding requirement, thereby ensuring the welding quality and effectively preventing the thickness at the welding position from being too large to affect the welding yield. Moreover, any position on the thinned region 101 in the first direction can be welded to the conductive terminal. Therefore, the thinned region 101 has good tolerance and provides space for changes in the position and structure of the conductive terminal on the top cover 300 of the battery cell, which is conducive to improving the welding yield. Based on this, referring to FIG. 13 to FIG. 15, in some embodiments, the connecting piece 100 is provided with a second through hole 108 corresponding to the thinned region 101, the conductive terminal is provided with a protruding portion 303, and the protruding portion 303 is inserted into the second through hole 108 and is welded to the thinned region 101. The protruding portion 303 may be welded to the thinned region 101 by seam welding. The shape of the second through hole 108 may match the shape of an outer periphery of the protruding portion 303, such that the protruding portion 303 can be welded to the thinned region 101 by seam welding. The insertion of the protruding portion 303 into the second through hole 108 can reduce the space occupied by the connecting piece 100 and the conductive terminal in a height direction of the cell (i.e., in a thickness direction of the connecting piece 100), which is conducive to improving the utilization of space in the battery cell and increasing the volumetric energy density.

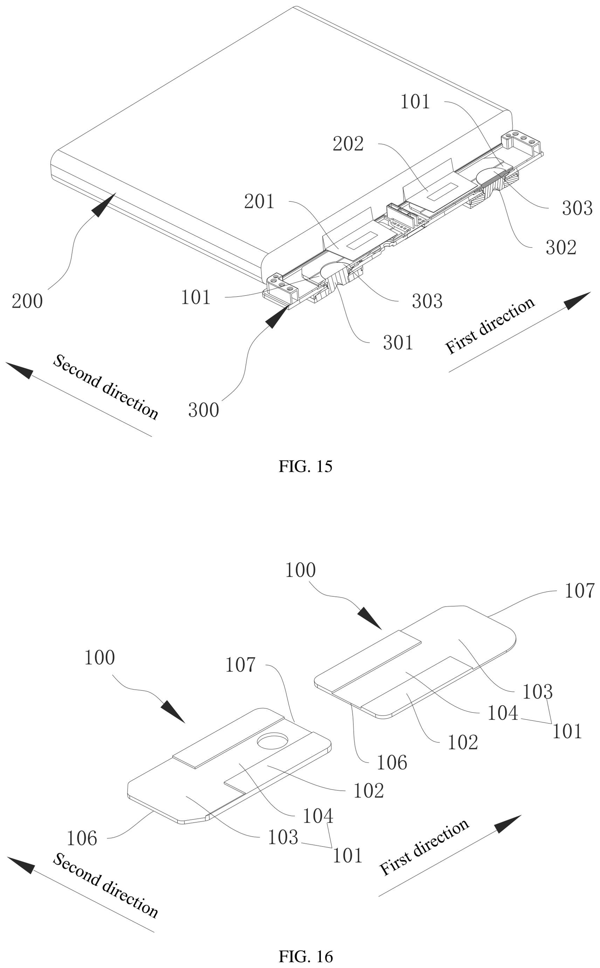

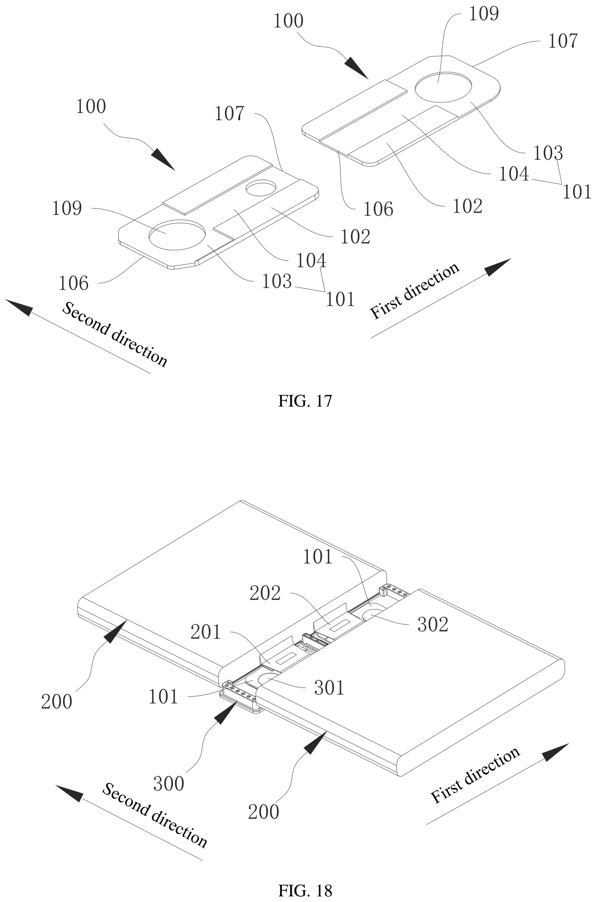

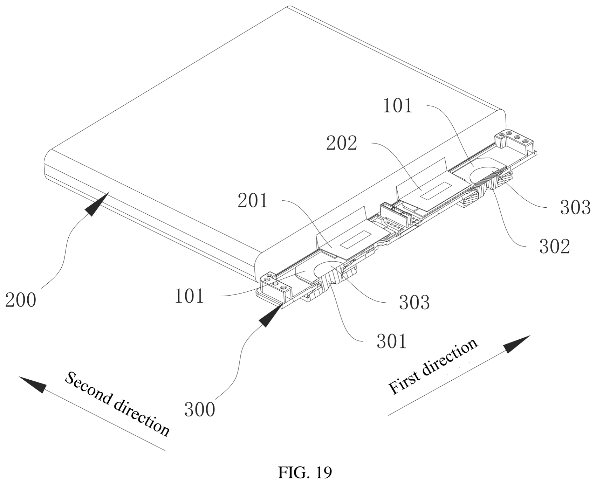

In some embodiments, the connecting piece 100 has a first direction and a second direction intersecting the first direction. The first direction and the second direction may intersect perpendicularly or at an acute angle or an obtuse angle. FIG. 16 to FIG. 19 show an example where the first direction and the second direction intersect perpendicularly. Referring to FIG. 16, the thinned region 101 includes a first region 103 and a second region 104, one end of the first region 103 in the first direction is connected to one end of the second region 104 in the first direction, and along the second direction, a width of the first region 103 is greater than a width of the second region 104. As such, a substantially T-shaped thinned region 101 is formed. Similar to the connecting piece 100 shown in FIG. 1, the first region 103 of the thinned region 101 may extend over an edge of the connecting piece 100 in the second direction, and therefore the thinned region 101 is suitable for being welded to conductive terminals of various sizes and has good tolerance, which is conducive to improving the welding yield. In addition, compared with the connecting pieces 100 shown in FIG. 1, FIG. 9, and FIG. 12, a larger thinned region 101 can be formed on the connecting piece 100 in this embodiment, such that the weight and the material consumption can be reduced to a greater extent while meeting the area of the current conduction cross-section. Based on this, referring to FIG. 17 to FIG. 19, in some embodiments, the first region 103 is provided with a third through hole 109, the conductive terminal is provided with a protruding portion 303, and the protruding portion 303 is inserted into the third through hole 109 and is welded to the first region 103. The protruding portion 303 may be welded to the first region 103 by seam welding. The shape of the third through hole 109 may match the shape of an outer periphery of the protruding portion 303, such that the protruding portion 303 can be welded to the first region 103 by seam welding. The insertion of the protruding portion 303 into the third through hole 109 can reduce the space occupied by the connecting piece 100 and the conductive terminal in a height direction of the cell (i.e., in a thickness direction of the connecting piece 100), which is conducive to improving the utilization of space in the battery cell and increasing the volumetric energy density.

In the above embodiments, the area of the thinned region 101 needs to be configured on the premise of meeting the current conduction area. For example, in some embodiments, the area of the thinned region 101 is less than or equal to 90% of the area of the connecting piece 100. Such a configuration can reduce the material consumption and costs while ensuring the current conduction area, and also can reduce the weight to improve the gravimetric energy density.

The battery cell according to the embodiment of the present disclosure may be applied to the field of power batteries, and can ensure the laser welding yield and reduce the weight and material costs while meeting the requirement on the current conduction area for fast charging, thereby obtaining a battery cell with high energy density. In some embodiments, the space occupied by the connecting piece 100 and the conductive terminal in a height direction of the cell core 200 can also be reduced, thereby improving the space utilization and the volumetric energy density.

The embodiments of the present disclosure have been described in detail above with reference to the accompanying drawings, but the present disclosure is not limited to the above embodiments, and various changes may be made within the knowledge of those having ordinary skills in the art without departing from the protection scope of the present disclosure. In addition, the embodiments of the present disclosure and the features in the embodiments may be combined with each other without conflict.

## Claims

1. A battery cell, comprising:
a cell core (200), wherein a tab extends from one end of the cell core (200);
a top cover (300), comprising a conductive terminal; and
a connecting piece (100), comprising a base body (102) and a thinned region (101), wherein a thickness of the thinned region (101) is less than a thickness of the base body (102),
wherein the conductive terminal is welded to the thinned region (101), and the tab is welded to the base body (102).

2. The battery cell of claim 1, wherein the connecting piece (100) has a first direction and a second direction intersecting the first direction, and one end of the thinned region (101) in the first direction is connected to one end of the base body (102) in the first direction.

3. The battery cell of claim 2, wherein the conductive terminal is provided with a protruding portion (303), the thinned region (101) is provided with a first through hole (105), and the protruding portion (303) is inserted into the first through hole (105) and is welded to the thinned region (101).

4. The battery cell of claim 1, wherein a sink hole is provided on a side of the connecting piece (100) in a thickness direction to form the thinned region (101), the sink hole is polygonal, circular, or elliptical, and the conductive terminal is welded to a side of the thinned region (101) facing away from the sink hole.

5. The battery cell of claim 1, wherein the connecting piece (100) has a first direction and a second direction intersecting the first direction; along the first direction, the connecting piece (100) comprises a first end (106) and a second end (107); and along the second direction, the thinned region (101) is located in a middle portion of the connecting piece (100), the base body (102) is arranged on two sides of the thinned region (101), and the thinned region (101) extends along the first direction to the first end (106) and the second end (107).

6. The battery cell of claim 5, wherein the connecting piece (100) is provided with a second through hole (108) corresponding to the thinned region (101), the conductive terminal is provided with a protruding portion (303), and the protruding portion (303) is inserted into the second through hole (108) and is welded to the thinned region (101).

7. The battery cell of claim 1, wherein the connecting piece (100) has a first direction and a second direction intersecting the first direction, the thinned region (101) comprises a first region (103) and a second region (104), one end of the first region (103) in the first direction is connected to one end of the second region (104) in the first direction, and along the second direction, a width of the first region (103) is greater than a width of the second region (104).

8. The battery cell of claim 7, wherein the first region (103) is provided with a third through hole (109), the conductive terminal is provided with a protruding portion (303), and the protruding portion (303) is inserted into the third through hole (109) and is welded to the first region (103).

9. The battery cell of claim 1, wherein an area of the thinned region (101) is less than or equal to 90% of an area of the connecting piece (100).

10. The battery cell of any one of claims 1 to 9, wherein a positive tab (201) and a negative tab (202) extend from one end of the cell core; the top cover (300) comprises a positive electrode conductive terminal (301) and a negative electrode conductive terminal (302), and two connecting pieces (100) are provided;
the thinned region (101) of one of the connecting pieces (100) is connected to the positive electrode conductive terminal (301) by laser penetration welding, and the base body (102) is connected to the positive tab (201) by ultrasonic welding; and
the thinned region (101) of the other connecting piece (100) is connected to the negative electrode conductive terminal (302) by laser penetration welding, and the base body (102) is connected to the negative tab (202) by ultrasonic welding.
